# EUROPÄISCHE PATENTSCHRIFT

(11) **EP 2 925 499 B1**
(45) Veröffentlichungstag und Bekanntmachung des Hinweises auf die Patenterteilung: **09.11.2016**
(21) Anmeldenummer: 13795470.7
(22) Anmeldetag: 22.11.2013
(51) Int. Cl.: B29C 43/28, B29C 43/48, B29C 43/30, B29C 69/00, B29C 43/14, B29C 43/20, B29L 31/30

(54) **VERFAHREN ZUM HERSTELLEN EINES STRUKTURBAUTEILS FÜR EINE KAROSSERIE**
PROCESS FOR MAKING A FRAMEWORK COMPONENT FOR AN AUTOBODY
PROCÉDÉ DE FABRICATION D' UN COMPOSANT DE CHÂSSIS D' UNE CARROSSERIE

(30) Priorität: 27.11.2012 DE 102012111488
(43) Veröffentlichungstag der Anmeldung: 07.10.2015
(73) Patentinhaber: ThyssenKrupp Steel Europe AG, 47166 Duisburg (DE)
(72) Erfinder: KRAHNERT, Torsten, 14554 Seddin (DE); PATBERG, Lothar, 47445 Moers (DE); MAYER, Stefan, 58239 Schwerte (DE)
(74) Vertreter: ThyssenKrupp Intellectual Property GmbH
(86) Internationale Anmeldenummer: PCT/EP2013/074477
(87) Internationale Veröffentlichungsnummer: WO 2014/082929

(56) Entgegenhaltungen:
- EP-A1- 1 336 469
- DE-A1-102009 042 272
- DE-A1-102010 054 195
- DE-A1-102011 100 396
- FR-A1- 2 749 535
- DATABASE WPI Week 201277 Thomson Scientific, London, GB; AN 2012-P61682 XP002722301, -& JP 2012 214003 A (SEKISUI CHEM IND CO LTD) 8. November 2012 (2012-11-08)

## Beschreibung

Die Erfindung betrifft ein Verfahren zum Herstellen eines Strukturbauteils, insbesondere eines Strukturbauteils für eine Karosserie, bei dem ein flächiges Trägermaterial aus Metall, thermoplastischem Kunststoff und/oder faserverstärktem thermoplastischem Kunststoff zu einem dreidimensionalen Bauteil umgeformt wird, und bei dem das Trägermaterial mit Stützmaterial aus thermoplastischem Kunststoff versehen wird, so dass das Trägermaterial und das Stützmaterial einen stoffschlüssigen Materialverbund bilden.

Der Begriff Strukturbauteil umfasst im vorliegenden Kontext insbesondere Leichtbauteile und Stützbauteile für Fahrzeuge.

Aus der DE 10 2008 058 225 A1 ist ein Verfahren zur Herstellung eines Leichtbauteils in Hybridform bekannt, bei dem ein als Formteil ausgebildeter Grundkörper aus verzinktem Eisen, der beispielsweise eine U-Profilform aufweist und durch Umformen eines Stahlblechs hergestellt wurde, mit thermoplastischem Kunststoff in der Weise hinterspritzt wird, dass der Grundkörper des fertigen Leichtbauteils rippenförmige Verstärkungsstrukturen aufweist, die aus dem angespritzten Thermoplasten bestehen.

Die DE 10 2009 042 272 A1 offenbart ein Leichtbauteil, insbesondere Karosserieteil, aus Metallblech mit einer Rippen aufweisenden Verstärkungsstruktur aus Kunststoff, wobei das Metallblech stoffschlüssig mit einer Verstärkungsschicht aus Kunststoff verbunden ist, die wiederum stoffschlüssig mit der Verstärkungsstruktur aus Kunststoff verbunden ist. Zur Herstellung dieses Leichtbauteils werden in der DE 10 2009 042 272 A1 mehrere Verfahren vorgeschlagen, bei denen das Metallblech jeweils umgeformt und sodann in eine Formhälfte eingelegt wird. Die Verstärkungsschicht wird aus einem flächigen Vorprodukt hergestellt, das eine thermoplastische Matrix mit Verstärkungsfasern aufweist. Das flächige Vorprodukt wird dabei erwärmt und sodann auf das umgeformte Metallblech aufgebracht. Zur Herstellung der Verstärkungsstruktur (Rippen) wird bei einer Variante des Verfahrens faserverstärkter Thermoplast extrudiert und auf dem erwärmten flächigen Vorprodukt angeordnet. Anschließend wird eine Formhälfte aufgelegt, und die beiden Formhälften werden gegeneinander verpresst. In einer anderen Variante des Verfahrens wird zunächst das flächige Vorprodukt mit dem umgeformten Metallblech verbunden, indem auf das erwärmte Vorprodukt, das auf das umgeformte, in die Formhälfte eingelegte Metallblech angeordnet wurde, eine Formhälfte aufgelegt wird und die beiden Formhälften gegeneinander gepresst werden. Das so mit dem flächigen Vorprodukt verstärkte Metallblech wird dann aus der Presse entnommen und in ein Spritzgusswerkzeug eingelegt. Zur Herstellung der Verstärkungsrippen wird dann der extrudierte faserverstärkte Thermoplast in dem Spritzgusswerkzeug auf das mit dem flächigen Vorprodukt verstärkte Metallblech aufgespritzt.

Als weiteren Stand der Technik wird die europäische anmeldung 1336469 angeführt welches ein Verfahren zur Herstellung eines länglichen Versteifungselement für eine Flugzeug-Platte, umfassend die folgenden Schritte, Herstellen eines Stapels aus gebogenen Blechstreifen, um einen Querschnitt mit einer vorgegebenen Form zu erzeugen, wobei zumindest eine Schicht mit einer harzimprägnierten Faser zwischen zwei aufeinanderfolgende Blechstreifen angeordnet wird, und Aufbringen von Wärme und Druck auf den entsprechend erstellten Stapel in einer Art und Weise, um das Harz auszuhärten und die form zu härten. Aus einem weiteren Dokument (JP 2012-214003 A) geht ein Verfahren zur Herstellung eines Strukturbauteils, insbesondere einer Unterbodenverkleidung hervor, wobei ein flächiges Trägermaterial aus Metall oder aus thermoplastischen Kunststoff oder aus faserverstärktem thennoplastischem Kunststoff zu einem dreidimensionalen Bauteil umgeformt wird. Das Trägermaterial ist mit einem Stützmaterial aus thermoplastischem Kunststoff verseilen, so dass das Trägermaterial mit Stützmaterial einen stoffschlüssigen Materialverbund bilden. Der aus dem Trägermaterial und dem Stützmaterial aufgebaute Materialverbund wird vor dem Umformen des Trägermaterials zu dem dreidimensionalen Bauteil hergestellt, wobei der Mateterialverbun vor der Umformung erwärmt wird, um eine Umformung des thermoplastischen Kunststoffs zu ermöglichen. Schließlich wird das Bauteil temperiert, insbesondere abgekühlt.

Diese bekannten Verfahren zur Herstellung von Leichtbauteilen in Hybridform erfordern relativ viele Fertigungsschritte bzw. die Kombination mehrerer Prozesse.

Davon ausgehend lag der vorliegenden Erfindung die Aufgabe zugrunde, ein Verfahren der eingangs genannten Art anzugeben, das relativ wenige Fertigungsschritte erfordert und eine relativ hohe Produktivität bietet, insbesonde um eine ausreichende Steifigkeit und Festigkeit des Strukturbauteils sicherzustellen.

Zur Lösung dieser Aufgabe wird ein Verfahren mit den Merkmalen des Anspruchs 1 vorgeschlagen.

Das erfindungsgemäße Verfahren ist dadurch gekennzeichnet, dass das Trägermaterial einschichtig oder als mehrschichtiger Materialverbund ausgebildet ist, wobei eine der Lagen des mehrschichtigen Materialverbundes Metall besteht der Materialverbund aus Trägermaterial und Stützmaterial vor dem Umformen des Trägermaterials zu dem dreidimensionalen Bauteil hergestellt wird, wobei die Schichtdicke des Stützmaterials mindestens das zweifache der Dicke des flächigen, ein- oder mehrlagigen Trägermaterials beträgt, dass der Materialverbund vor dem Umformen erhitzt wird, um eine Umformung des thermoplastischen Kunststoffs zu ermöglichen, dass während des Umformens des Materialverbundes eine Rippenstruktur in das Stützmaterial eingeprägt wird, und dass das dreidimensionale, die Rippenstruktur aufweisende Bauteil temperiert wird.

Das erfindungsgemäße Verfahren basiert auf der Idee, ein fertig konsolidiertes Halbzeug zu schaffen, das in einem thermischen Umformprozess zu einem fertigen Strukturbauteil mit der gewünschten Endgeometrie weiterverarbeitet wird. Der thermische Umformprozess kann dabei gängige Operationsstufen wie Lochen, Schneiden und/oder Abstellen beinhalten. Dementsprechend sieht eine bevorzugte Ausgestaltung des erfindungsgemäßen Verfahrens vor, dass das die Rippenstruktur aufweisende Bauteil beschnitten, gelocht und/oder auf Endkontur abgestellt wird.

Dadurch, dass das Einformen der Rippenstruktur in das Stützmaterial zeitlich parallel zu dem Umformen des flächigen Trägermaterials durchgeführt wird, ist die Anzahl der Fertigungsschritte bei dem erfindungsgemäßen Verfahren erheblich verringert. Insbesondere wird dadurch eine erhöhte Produktivität ermöglicht bzw. erzielt.

Damit das erfindungsgemäß hergestellte Strukturbauteil ein hohes Energieaufnahmevermögen (Stoßenergieabsorptionsvermögen) aufweist, wird für dessen Trägermaterial vorzugsweise faserverstärkter thermoplastischer Kunststoff (Organoblech) verwendet, wobei das Trägermaterial einschichtig aber auch mehrschichtiger insbesondere als sandwichartiger Materialverbung ausgebildet sein kann, und wobei eine der Lagen (Schichten) des mehrschichtigen Materialverbundes aus Metall, besonders bevorzugt aus Stahl, beispielsweise verzinktem Stahlblech bc-steht.

Als flächiges Trägermaterial wird bei dem erfindungsgemäßen Verfahren Metallblech, thermoplastisches Tafel- oder Flachmaterial und/oder faserverstärktes, thermoplastisches Tafel- oder Flachmaterial (sogenanntes Organoblech) verwendet. Das Trägermaterial kann dabei ein- oder mehrlagig, insbesondere zweilagig oder als Sandwichmaterial ausgebildet sein. Die Lagen des mehrlagigen Trägermaterials bestehen vorzugsweise aus unterschiedlichen Materialien, beispielsweise aus Metall und thermoplastischem Kunststoff mit oder ohne Faserverstärkung. Des Weiteren umfasst das erfindungsgemäße Verfahren Ausführungsformen, bei denen das flächige Trägermaterial als Bandmaterial oder als Zuschnitt, zum Beispiel in Form einer Platine verarbeitet wird.

Das Trägermaterial hat insbesondere die Funktion, die Geometrie (Form) des fertigenden Strukturbauteils zu definieren. So kann beispielsweise Metallblech als Trägermaterial die Außenhaut des erfindungsgemäß hergestellten Strukturbauteils definieren. Des Weiteren verleiht das ein- oder mehrlagige Trägermaterial dem erfindungsgemäß hergestellten Strukturbauteil ein bestimmtes Maß an Steifigkeit und Festigkeit, welches jedoch allein genommen für den vorgesehenen Einsatzzweck des Strukturbauteil in der Regel nicht ausreichend ist. Zur Sicherstellung einer ausreichenden Steifigkeit und Festigkeit des Strukturbauteils dient in Ergänzung zu dem umgeformten Trägermaterial das Stützmaterial mit der darin eingeformten Rippenstruktur.

Sofern in dem erfindungsgemäßen Verfahren faserverstärkter thermoplastischer Kunststoff als Trägermaterial bzw. neben Metall als zusätzliches Trägermaterial verwendet wird, so enthält das Trägermaterial Lang-, Kurz- und/oder Endlosfasern aus anorganischem und/oder organischem Material. Unter Kurzfasern werden dabei Fasern mit einer Länge im Bereich von 0,1 bis 1 mm, unter Langfasern Fasern mit einer Länge im Bereich von 1 mm bis 50 mm, und unter Endlosfasern Fasern mit einer Faserlänge größer 50 mm verstanden.

Bei den anorganischen Fasern (Verstärkungsfasern) handelt es sich vorzugsweise um Glas-, Keramik- und/oder Basaltfasern. Die organischen Fasern (Verstärkungsfasern) bestehen dagegen beispielsweise aus Aramid-, Nylon- und/oder Kohlenstofffasern.

Bei dem thermoplastischen Kunststoff des Trägermaterials bzw. des Stützmaterials handelt es sich vorzugsweise um Polyamid (PA), Polypropylen (PP), Polycarbonat (PC), (PC), Polyethersulfon (PES), Acrylnitril-Butadien-Styrol (ABS), Styrol-Acrylnitril-Copolymerisat (SAN), Polyoxymethylen (POM), Polytetrafluorethylen (PTFE), thermoplastisches Polyurethan (TPU), Polyethylen (PE), Polybutylenterephthalat (PBT) und/oder deren Mischungen. Vorzugsweise weist der in dem erfindungsgemäßen Verfahren verwendete thermoplastische Kunststoff eine Temperaturbeständigkeit von mindestens 80°C, besonders bevorzugt mindestens 100°C auf.

Das thermoplastische Stützmaterial wird mit einer Schichtdicke auf das flächige, ein- oder mehrlagige Trägermaterial aufgebracht, die je nach Anwendungsfall entsprechend der zu erzeugenden Rippendicke und/oder Rippenggröße ausgelegt wird, vorzugsweise mindestens das Zweifache, besonders bevorzugt mindestens das Dreifache der Dicke des flächigen, ein- oder mehrlagigen Trägermaterials beträgt.

Das Stützmaterial kann in mehreren Lagen auf das Trägermaterial aufgebracht werden. Eine weitere Ausgestaltung des erfindungsgemäßen Verfahrens ist dadurch gekennzeichnet, dass die Lagen des Stützmaterials mit unterschiedlicher Materialzusammensetzung, unterschiedlicher Flächengröße und/oder unterschiedlicher Schichtdicke auf das Trägermaterial aufgebracht werden. Auf diese Weise lassen sich aus dem erfindungsgemäß hergestellten Materialverbund (Halbzeug) Strukturteile mit optimiertem Stoßenergieaufnahmevermögen bzw. optimierter Steifigkeit bei relativ geringem Bauteilgewicht erzeugen.

Eine weitere vorteilhafte Ausgestaltung des erfindungsgemäßen Verfahrens ist dadurch gekennzeichnet, dass das Stützmaterial auf definierte Teilflächenbereiche des Trägermaterials aufgebracht wird. Auch diese Ausgestaltung ist für eine Optimierung der Steifigkeit und/oder des Stoßenergieaufnahmevermögens des Strukturbauteils bei relativ geringem oder minimiertem Bauteilgewicht von Vorteil. Hierzu sieht eine weitere Ausgestaltung des Verfahrens vor, dass auf verschiedene Teilflächenbereiche des Trägermaterials das Stützmaterial mit unterschiedlicher Materialzusammensetzung und/oder unterschiedlicher Schichtdicke aufgebracht wird.

Zur Optimierung der Steifigkeit und/oder des Stoßenergieaufnahmevermögens des Strukturbauteils kann gemäß einer weiteren vorteilhaften Ausgestaltung des erfindungsgemäßen Verfahrens das Stützmaterial in Form eines einzelnen Streifens oder in Form mehrerer Streifen auf das Trägermaterial aufgebracht werden, und zwar so, dass der jeweilige Streifen einen bestimmten Teilflächenbereich des Trägermaterials bedeckt.

Eine weitere vorteilhafte Ausgestaltung des erfindungsgemäßen Verfahrens besteht darin, dass das Umformen des aus dem flächigen Trägermaterial und dem Stützmaterial aufgebauten Materialverbundes und das Temperieren des Bauteils mittels eines temperierten Umformwerkzeuges durchgeführt werden. Bei dem Umformwerkzeug kann es sich um ein "kaltes", konventionelles Werkzeug handeln, es kann aber auch temperierbar, d.h. aktiv kühlbar und/oder erwärmbar sein, je nach Bedarf. Hierdurch kann die Produktivität des Verfahrens weiter gesteigert werden.

Eine besonders hohe Produktivität lässt sich insbesondere dann erzielen, wenn gemäß einer weiteren Ausgestaltung des erfindungsgemäßen Verfahrens der aus dem Trägermaterial und dem Stützmaterial aufgebaute Materialverbund in einem kontinuierlichen Bandlaufprozess hergestellt wird, wobei bandförmiges Trägermaterial und bandförmiges Stützmaterial miteinander stoffschlüssig verbunden werden. Diese Ausgestaltung eignet sich insbesondere für die Herstellung von länglichen, profilförmigen Strukturbauteilen, zum Beispiel von Seitenaufprallträgern, Front- sowie Heckstoßfängern, Schwellern und/oder Fahrzeugdachsäulen.

Der im kontinuierlichen Bandlaufprozess hergestellte Materialverbund kann zu einem Coil aufgewickelt oder zu Platinen abgelängt werden, wobei das jeweilige Coil bzw. die Platinen anschließend zu dem gewünschten Strukturbauteil weiterverarbeitet werden können.

Eine andere Ausgestaltung des erfindungsgemäßen Verfahrens sieht vor, dass der aus dem Trägermaterial und dem Stützmaterial aufgebaute Materialverbund in einem diskontinuierlichen Laminier- und/oder Materialauftragsprozess hergestellt wird, wobei auf vorkonfektionierte Trägermaterialplatinen zumindest partiell Stützmaterial in der Weise aufgebracht wird, dass eine stoffschlüssige Verbindung zwischen der jeweiligen Trägermaterialplatine und dem darauf aufgebrachten Stützmaterial erzeugt wird. Diese Ausgestaltung ist insbesondere dann vorteilhaft, wenn das Stützmaterial auf einen oder mehrere definierte Teilflächenbereiche des Trägermaterials aufgebracht werden soll. Auf diese Weise können maßgeschneiderte Stützmaterial-Flächenabschnitte (Zuschnitte) auf einen oder mehrere definierte Teilflächenbereiche des Trägermaterials aufgebracht werden. Die maßgeschneiderten Stützmaterial-Flächenabschnitte können sich dabei in ihrer Form (Geometrie), Schichtdicke und/oder Materialbeschaffenheit unterscheiden.

Der Aufbau des aus dem flächigen Trägermaterial und dem thermoplastischen Stützmaterial hergestellten Materialverbundes (Halbzeuges) kann bei dem erfindungsgemäßen Verfahren in unterschiedlicher Weise ausgeführt sein bzw. werden. In einer Ausgestaltung des Verfahrens ist vorgesehen, dass das Stützmaterial in Form einer homogenen, flächigen Schicht auf das Trägermaterial aufgebracht wird. Diese Ausgestaltung lässt sich prozesstechnisch relativ einfach mittels eines kontinuierlichen Bandlaufprozess, aber bei Verwendung von vorkonfektionierten Platinen bzw. Tafeln in einem Patch- und Laminierprozess verwirklichen. Unter "Patchen" bzw. Patchprozess wird hier das Aufbringen von zugeschnittenen bzw. maßgeschneiderten Stützmaterial-Flächenstücken verstanden.

Nach einer weiteren Ausgestaltung des Verfahrens ist vorgesehen, dass als Stützmaterial faserverstärkter thermoplastischer Kunststoff verwendet wird. Aus dem so erhaltenen Materialverbund (konsolidiertes Halbzeug) lässt sich durch thermisches Umformen ein Strukturbauteil, insbesondere Karosserieteil, mit relativ geringem Gewicht und hoher Steifigkeit sowie Festigkeit erzeugen. Durch die Verwendung von faserverstärktem thermoplastischem Kunststoff als Stütz-material lassen sich Strukturbauteile, insbesondere Leichtbauteile, mit hohem Stoßenergieaufnahmevermögen erzielen.

Die die Steifigkeit sowie Festigkeit erhöhende Rippenstruktur des erfindungsgemäß hergestellten Strukturbauteils wird anforderungsgerecht ausgelegt, beispielsweise als waben-, rechteck- oder rautenförmige Struktur ausgebildet. Die Struktur/Form wird anwendungsabhängig ausgelegt, so dass bzw. wobei auch unregelmäßige Strukturen gewählt werden können. Eine entsprechend ausgebildete Rippenstruktur verleiht dem Strukturbauteil bei geringem Bauteilgewicht eine hohe Steifigkeit sowie Festigkeit.

Eine weitere vorteilhafte Ausgestaltung des erfindungsgemäßen Verfahrens ist dadurch gekennzeichnet, dass die Rippenstruktur zumindest partiell in Form einer auxetischen Rippenstruktur eingeprägt wird. Eine auxetische Struktur besitzt Querverformungseigenschaften, die sich gegensätzlich zu denen konventioneller Materialien, insbesondere einer klassischen Wabenstruktur verhalten. Denn während bei konventionellen Materialien bzw. Rippenstrukturen eine positive Zugbeanspruchung zu einer Verlängerung in Zugrichtung und gleichzeitig zu Verkürzungen in den dazu senkrechten Richtungen führt, erzeugen unidirektionale Zugspannungen bei einer auxetischen Struktur positive Längenänderungen in allen drei Raumrichtungen. Durch das Einformen einer auxetischen Rippenstruktur lassen sich insbesondere Eigenschaften wie Steifigkeit, Stoßenergieabsorptionsvermögen, Nachgiebigkeit und Bruchfestigkeit sehr vorteilhaft beeinflussen. Eine auxetische Rippenstruktur ermöglicht insbesondere eine signifikante Erhöhung der thermischen Beulstabilität.

Weitere bevorzugte und vorteilhafte Ausgestaltungen des erfindungsgemäßen Verfahrens lassen sich den Unteransprüchen entnehmen.

Nachfolgend wird die Erfindung anhand einer mehrere Ausführungsbeispiele darstellenden Zeichnung näher erläutert. Darin zeigen schematisch:
- Fig. 1: eine Anlage zur Herstellung eines Halbzeuges, das aus flächigem Trägermaterial und thermoplastischem Stützmaterial aufgebaut ist;
- Fig. 2: eine weitere Anlage zur Herstellung eines Halbzeuges, das aus flächigem Trägermaterial und thermoplastischem Stützmaterial aufgebaut ist;
- Fig. 3 und 4: erfindungsgemäß hergestellte Halbzeuge, jeweils in Querschnittansicht;
- Fig. 5: ein weiteres erfindungsgemäß hergestelltes Halbzeug, in Draufsicht;
- Fig. 6a und 6b: ein weiteres erfindungsgemäß hergestelltes Halbzeug, in Querschnittansicht und in Draufsicht;
- Fig. 7a und 7b: noch ein weiteres erfindungsgemäß hergestelltes Halbzeug, in Querschnittansicht und in Draufsicht;
- Fig. 8: eine Anlage zum thermischen Umformen eines erfindungsgemäß hergestellten Halbzeuges,
- Fig. 9: eine weitere Anlage zum thermischen Umformen eines erfindungsgemäß hergestellten Halbzeuges,
- Fig. 10 bis 12: verschiedene Rippenstrukturen von erfindungsgemäß hergestellten Strukturbauteilen, jeweils in Draufsicht; und
- Fig. 13 und 14: zwei erfindungsgemäß hergestellte Strukturbauteile, jeweils in perspektivischer Darstellung.

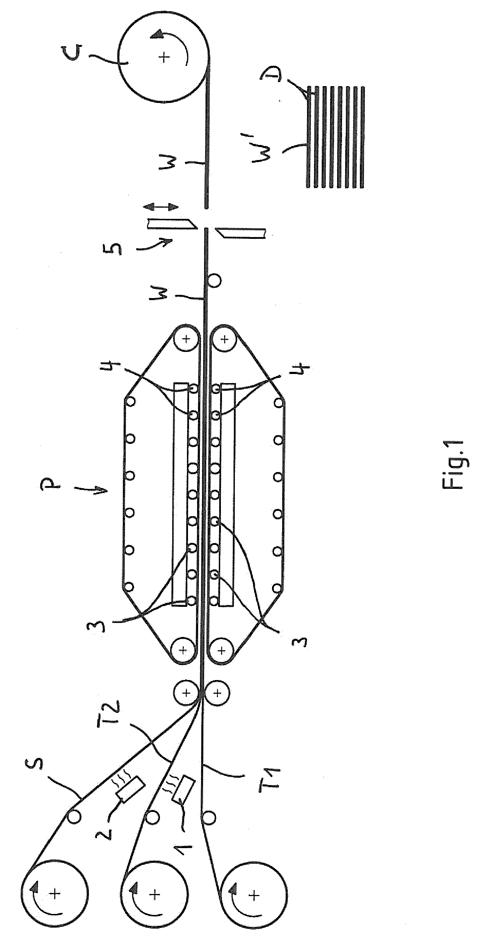

In Fig. 1 ist eine Anlage zur Herstellung eines erfindungsgemäßen Materialverbundes als konsolidiertes Halbzeug zur Weiterverarbeitung zu einem Strukturbauteil, insbesondere Karosserieteil, schematisch dargestellt. In dieser Anlage wird in einem kontinuierlichen Bandlaufprozess ein Materialverbund (Halbzeug) W oder W' hergestellt, der aus einem ein- oder mehrlagigen, flächigen Trägermaterial und einem ein- oder mehrlagigen thermoplastischen Stützmaterial aufgebaut ist. Hierzu wird bandförmiges, plastisch umformbares Trägermaterial T1, vorzugsweise Metallblech, beispielsweise verzinktes Stahlband, das als Coil vorliegt, vom Coil abgewickelt und einer Bandpresse P zugeführt. Auf das flächige Trägermaterial T1 kann gegebenenfalls eine zweite Trägermaterialschicht T2 aus faserverstärktem thermoplastischem Kunststoff aufgebracht werden. Neben der genannten Kombination der Trägermaterialien T1, T2 können diese auch einzeln als Trägermaterialien T1 oder T2 zur Anwendung kommen. Diese zweite Trägermaterialschicht T2 kann ebenfalls als Coil vorliegen. Mit 1 ist eine Heizvorrichtung, z.B. ein Heizstrahler bezeichnet, mittels dem die mit der Trägermaterialschicht T1 stoffschlüssig zu verbindende Seite der zweiten Trägermaterialschicht T2 plastifiziert oder angeliert wird. Es liegt jedoch auch im Rahmen der vorliegenden Erfindung, die zweite Trägermaterialschicht T2 direkt auf die erste Trägermaterialschicht T1, die vorzugsweise aus Metallblech besteht, zu extrudieren.

Des Weiteren wird auf das ein- oder mehrschichtige Trägermaterialband T1, T2, bei dem es sich vorzugsweise um ein Metallband oder ein Metall-Kunststoff-Verbundband handelt, ein thermoplastisches Stützmaterial S aufgebracht. Das thermoplastische Stützmaterial S liegt in dem dargestellten Ausführungsbeispiel ebenfalls als aufgewickeltes Band (Coil) vor. Mit 2 ist wiederum eine Heizvorrichtung bezeichnet, mittels der die mit dem Trägermaterialband T1, T2 stoffschlüssig zu verbindende Seite des Stützmaterialbandes S plastifiziert oder angeliert wird.

Die Bänder T1, T2, S werden mittels Umlenk- bzw. Führungsrollen zusammengeführt, in die Bandpresse P geleitet und dort miteinander zu einem bandförmigen Materialverbund W verpresst. Die Bandpresse P weist hierzu beheizte Rollen 3 und eine diesen Rollen 3 in Transportrichtung nachfolgende Kühleinrichtung auf. Die Kühleinrichtung umfasst beispielsweise gekühlte Andruckrollen 4, die in der Bandpresse angeordnet sind. Die Dicke des thermoplastischen Stützmaterialsbandes S bzw. des auf das Trägermaterial T1, T2 aufgetragenen Stützmaterials S ist anwendungsgerecht ausgelegt und beträgt beispielsweise ein Vielfaches der Dicke des ein- oder mehrlagigen Trägermaterialbandes T1, T2. Beispielsweise liegt die Dicke des Trägermaterialbandes T1 und/oder T2 im Bereich von 0,5 bis 1,5 mm, während die Dicke des Bandes S aus thermoplastischem Stützmaterial im Bereich von 4 bis 8 mm liegt.

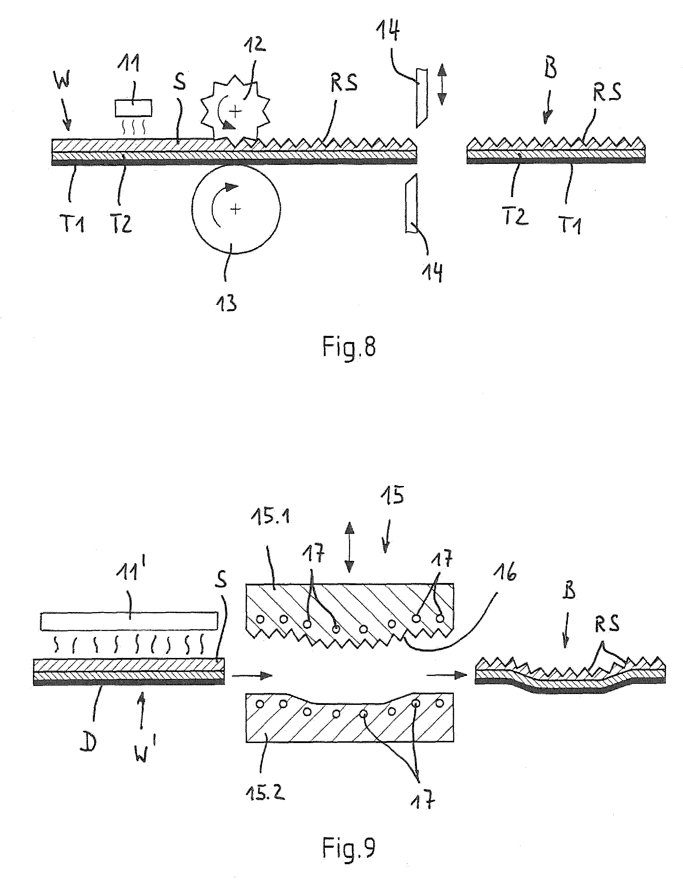

Der in dem kontinuierlichen Bandlaufprozess erzeugte bandförmige Materialverbund W wird zu einem Coil C aufgewickelt oder mittels einer Schneideeinrichtung 5 in Platinen D bestimmter Länge abgelängt. Das Coil C bzw. die Platinen D stehen somit als konsolidiertes Halbzeug W, W' zur Verfügung, um anschließend zu einem dreidimensionalen, eine Rippenstruktur aufweisenden Strukturbauteil, beispielsweise einem Karosserieteil verarbeitet zu werden. Die Weiterverarbeitung des konsolidierten Halbzeuges W, W', d.h. die Herstellung des Strukturbauteils wird nachfolgend anhand von in den Figuren 8 und 9 dargestellten Ausführungsbeispielen erläutert.

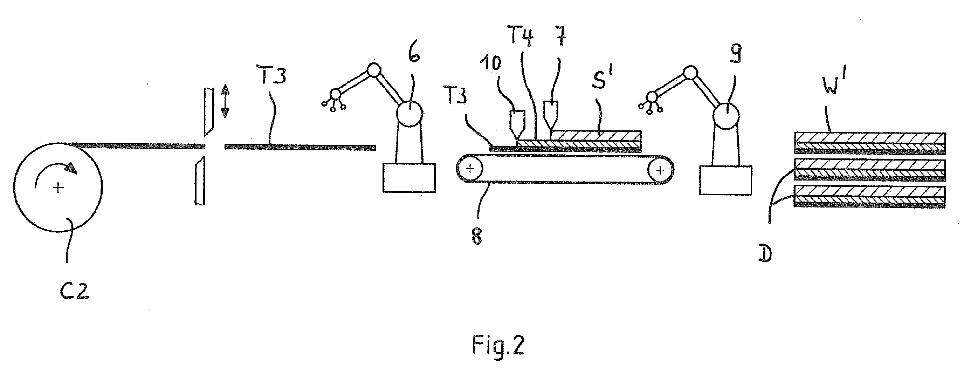

Fig. 2 zeigt ein weiteres Beispiel einer Anlage zur Herstellung eines erfindungsgemäßen Materialverbundes als konsolidiertes Halbzeug W' zur Weiterverarbeitung zu einem Strukturbauteil, insbesondere Karosserieteil. In der in Fig. 2 skizzierten Anlage werden vorkonfektionierte Platinen oder Tafeln T3 aus Metall und/oder faserverstärktem thermoplastischem Kunststoff (Organoblech) in einem diskontinuierlichen Patch- und Laminierprozess mit thermoplastischem Stützmaterial S' beschichtet. Der so hergestellte Materialverbund ist dementsprechend aus einem ein- oder mehrlagigen, flächigen Trägermaterial T3 aus Metall und/oder faserverstärktem thermoplastischem Kunststoff und einem ein- oder mehrlagigen thermoplastischen Stützmaterial S' aufgebaut.

Die Platinen oder Tafeln T3 werden beispielsweise durch Abwickeln und Ablängen eines entsprechenden Coils C2 erzeugt und anschließend mittels einer Transfervorrichtung 6, vorzugsweise einem Roboter, zu einer Bearbeitungsstation transportiert, in welcher auf die jeweilige Platine oder Tafel T3 thermoplastisches Stützmaterial S' aufgebracht wird. Das Stützmaterial S' kann dabei einlagig oder mehrlagig aufgebracht werden. In dem dargestellten Ausführungsbeispiel erfolgt das Auftragen des Stützmaterials S' mittels mindestens einer Extrusionsvorrichtung. Die Extrusionsvorrichtung weist hierzu vorzugsweise mindestens einen relativ zu der Platine/Tafel verfahrbaren Auftragskopf (Extruderauslass) 7 auf. Die Bearbeitungsstation kann beispielsweise ein Transportband 8 zur Aufnahme der Platine/Tafel T3 aufweisen, wobei der Auftragskopf 7 in Transportrichtung und zurück und/oder quer zur Transportrichtung verfahrbar ist. Alternativ kann der mindestens eine Auftragskopf 7 auch an einem in mehrere, quer zueinander verlaufende Richtungen bewegbaren Schlitten oder an einem Roboterarm montiert sein. Darüber hinaus kann eine entsprechende Extrusionsvorrichtung mit einem Auftragskopf 10 zum Aufbringen eines faserverstärkten Thermoplasten als zweite Trägermaterialschicht (Zwischenschicht) T4 vorgesehen sein.

Ferner liegt es im Rahmen der vorliegenden Erfindung, anstelle der in Fig. 2 dargestellten direkten Extrusion des thermoplastischen Stützmaterials S' auf das Trägermaterial T3 oder T4 das Stützmaterial S' in Form eines oder mehrerer vorkonfektionierter Flächenzuschnitte (Patches) auf das flächige Trägermaterial T3, T4 einlagig und/oder mehrlagig aufzubringen. Hierzu weist die Anlage dann eine Bearbeitungsstation mit einer Auflegevorrichtung 9, beispielsweise einem Roboter auf, mittels der/dem Tafeln und/oder endkonturoptimierte Flächenstücke (Patches) S' aus thermoplastischem Kunststoff mit oder ohne darin integrierten Fasern auf einen oder mehrere vorgegebene Bereiche des flächigen Trägermaterials T3 oder T4 aus Metall und/oder faserverstärktem, thermoplastischem Kunststoff aufgelegt werden. Die Tafeln und/oder endkonturoptimierten Flächenstücke S' werden dabei zumindest partiell mit dem flächigen Trägermaterial T3 oder T4 und gegebenenfalls miteinander stoffschlüssig verbunden, so dass die aufeinander gelegten Platinen, Tafeln T3, T4 bzw. Flächenstücke S' des hergestellten Materialverbundes relativ zueinander lagefixiert sind. Hierzu weist die Anlage, vorzugsweise die Auflegevorrichtung 9, mindestens ein Heiz- oder Schweißelement auf, mittels dem die thermoplastischen Tafeln bzw. Flächenstücke S' zumindest partiell mit dem Trägermaterial T3 oder T4 bzw. miteinander stoffschlüssig verbunden werden.

Des Weiteren umfasst das erfindungsgemäße Verfahren auch Ausführungsformen, bei denen die aufeinander gelegten Platinen, Tafeln T3, T4 bzw. Flächenstücke S' erhitzt und durch Aneinanderpressen in einer diskontinuierlich arbeitenden Presse zu einem flächigen Materialverbund (konsolidiertes Halbzeug) W' stoffschlüssig miteinander verbunden werden.

Die so, insbesondere gemäß Fig. 1 oder Fig. 2 hergestellten, vorkonfektionierten Materialverbundstücke bzw. konsolidierten Halbzeuge W' werden auf Paletten gestapelt oder in Behältern gesammelt, so dass eine Vielzahl solcher Materialverbundstücke W' zu Transport- und/oder Lagerungszwecken zusammengefasst sind.

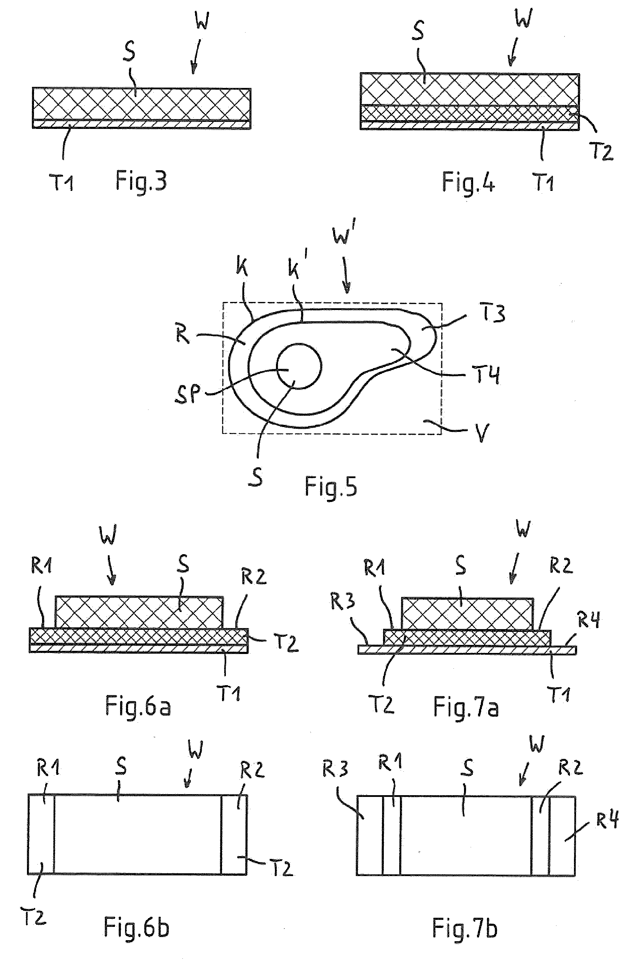

In den Figuren 3 bis 7b sind mehrere Ausführungsbeispiele von erfindungsgemäß hergestellten Halbzeugen, in Querschnittansicht bzw. in Draufsicht schematisch dargestellt.

Das Halbzeug W gemäß Fig. 3 ist aus einem flächigen Trägermaterial T1 aus Metallblech, thermoplastischem Kunststoff oder faserverstärktem thermoplastischem Kunststoff und einem homogenen, flächigen Stützmaterial S aus thermoplastischem Kunststoff aufgebaut. Die dem Stützmaterial S zugewandte Seite des Trägermaterials T1 ist dabei vollständig durch das Stützmaterial S bedeckt. Die Dicke des Stützmaterials S ist anwendungsgerecht ausgelegt und beträgt beispielsweise ein Vielfaches der Dicke des Trägermaterials T1. Vorzugsweise ist das flächige Stützmaterial S mindestens dreimal dicker als das flächige Trägermaterial T1. Es kann aber auch dünner sein.

Das in Fig. 4 darstellte Halbzeug W ist aus einem zweilagigen Trägermaterial T1, T2 aus Metallblech (T1) und thermoplastischem Organoblech (T2) und einem homogenen, flächigen Stützmaterial S aus thermoplastischem Kunststoff aufgebaut. Das Organoblech T2 ist dabei zwischen dem Metallblech T1 und dem einlagigen thermoplastischen Stützmaterial S angeordnet. Die drei Materiallagen T1, T2 und S des Halbzeugs W sind zueinander deckungsgleich ausgebildet. Die Dicke des Organoblechs T2 entspricht mindestens der Dicke des Metallblechs T1; vorzugsweise ist das Organoblech T2 aber deutlich dicker dimensioniert als das Metallblech T1. Beispielsweise beträgt die Dicke des Organoblechs T2 mindestens das 1,5-fache der Dicke des Metallblechs T1. Das Organoblech T2 verleiht einem aus dem Halbzeug (Materialverbund) W gemäß Fig. 4 hergestellten Strukturbauteil B ein hohes Stoßenergieaufnahmevermögen. Das im Wesentlichen homogen ausgebildete Organoblech T2 enthält organische und/oder anorganische Langfasern, Kurzfasern und/oder Endlosfasern als Verstärkungsfasern. Die Dicke des thermoplastischen Stützmaterials S kann wiederum ein Vielfaches der Dicke des Trägermaterials T1, T2 betragen. Vorzugsweise ist das flächige Stützmaterial S mindestens zweimal dicker als das flächige, zweilagige Trägermaterial T1, T2.

Das in Fig. 5 schematisch dargestellte Halbzeug W' ist ebenfalls dreischichtig ausgebildet. Es ist aus einem Metallblech T3, einem flächigen, faserverstärkten Thermoplasten T4 und einem homogenen, flächigen Stützmaterial S aus thermoplastischem Kunststoff aufgebaut. Der faserverstärkte Thermoplast T4 enthält Langfasern, Kurzfasern und/oder Endlosfasern als Verstärkungsfasern. Im Unterschied zu den in den Figuren 3 und 4 gezeigten Ausführungsbeispielen, bedeckt der faserverstärkte Thermoplast T4 das Metallblech T3 nicht vollflächig, sondern bedeckt einen definierten Teilbereich des Metallblechs T3. Der Teilbereich kann dabei eine asymmetrische Form mit relativ breiten und relativ schmalen Flächenabschnitten aufweisen. Das auf dem faserverstärkten Thermoplasten T4 angeordnete thermoplastische Stützmaterial S bedeckt ebenso einen definierten Teilbereich des faserverstärkten Thermoplasten T4.

Des Weiteren liegt es im Rahmen der vorliegenden Erfindung, das Halbzeug W' gemäß Fig. 5 derart auszubilden, dass der faserverstärkte Thermoplast T4 einen oder mehrere Ausschnitte (Ausnehmungen) aufweist, die mit thermoplastischen Stütz-material S gefüllt werden bzw. sind. Außerdem umfasst die vorliegende Erfindung auch Ausführungsformen, bei denen das thermoplastische Stützmaterial S ohne Zwischenschicht T4 auf einem Metallblech T3 aufgebracht wird, wobei in dem Stützmaterial S ein oder mehrere Ausschnitte (Ausnehmungen) vorgesehen werden, die mit einem oder verschiedenen faserverstärkten Thermoplasten T4 gefüllt werden bzw. sind.

Des Weiteren ist in Fig. 5 eine Ausgestaltung des erfindungsgemäßen Verfahrens skizziert, bei der das Halbzeug W' durch Beschneiden des Trägermaterials bzw. Metallblechs T3 an die Kontur des später herzustellenden Strukturbauteils angepasst wird, und bei der auch das auf das Metallblech T3 aufgebrachte Flächenstück (Patch) T4 aus einem faserverstärkten Thermoplasten sowie das darauf aufgebrachte Flächenstück (Patch) aus thermoplastischem Stützmaterial S an die Schnittkontur K des Metallbleches T3 bzw. an die Endkontur des herzustellenden Strukturbauteils angepasst sind. Die Kontur des faserverstärkten Thermoplasten T4 verläuft dabei beispielsweise mit Abstand zu der Kontur (Schnittkante) K des Metallblechs T3. Der als Verschnitt wegfallende Bereich des Metallblechs ist mit V bezeichnet. Der faserverstärkte Thermoplast T4 begrenzt nach dem Beschneiden des Metallblechs T3 einen nicht bedeckten Randstreifen R, der in Fig. 5 beispielsweise umlaufend ausgebildet ist.

Das Flächenstück aus thermoplastischem Stützmaterial S bedeckt in dem in Fig. 5 dargestellten Ausführungsbeispiel nur eine relativ kleine Fläche des faserverstärkten Thermoplasten T4 bzw. Metallblechs T3. Man kann somit von einem lokalen thermoplastischen Flächenstück (Patch) sprechen. Ebenso kann das Flächenstück SP aus thermoplastischem Stützmaterial S aber bei Bedarf auch so ausgebildet werden, dass seine Kontur im Wesentlichen parallel zu der Kontur K' des faserverstärkten Thermoplasten T4 und/oder parallel zu der Schnittkante K des Metallblechs T3 verläuft.

Das in den Figuren 6a und 6b dargestellte Halbzeug W ist aus einem zweilagigen Trägermaterial aus Metallblech T1 und thermoplastischem Organoblech T2 und einem homogenen, flächigen Stützmaterial S aus thermoplastischem Kunststoff aufgebaut, wobei das Stützmaterial S in Form eines kontinuierlichen Streifens auf das flächige Trägermaterial T1, T2 aufgebracht ist, der einen Teilflächenbereich des Trägermaterials bedeckt. In dem hier dargestellten Ausführungsbeispiel begrenzt das Stützmaterial S zwei nicht bedeckte Randstreifen R1, R2 des Organoblechs T2 bzw. des zweilagigen Trägermaterials T1, T2.

Das in den Figuren 7a und 7b dargestellte Halbzeug W ist ebenfalls aus Metallblech T1, thermoplastischem Organoblech T2 und einem homogenen, flächigen Stützmaterial S aus thermoplastischem Kunststoff aufgebaut. Bei diesem Ausführungsbeispiel ist auch der faserverstärkte Thermoplast (Organoblech) T2 in Form eines kontinuierlichen Streifens auf das Metallblech T1 aufgebracht. Somit begrenzt das Organoblech T2 zwei nicht bedeckte Randstreifen R3, R4 des Metallblechs T1, während das streifenförmig aufgebrachte Stützmaterial S zwei nicht bedeckte kontinuierliche Randstreifen R1, R2 des Organoblechs T2 begrenzt.

Die in den Figuren 5 und 6a bis 7b dargestellten Halbzeuge W, W' stellen hinsichtlich der daraus herzustellenden Strukturbauteile endkonturoptimierte bzw. endgeometrieoptimierte Halbzeuge dar.

Die erfindungsgemäß hergestellten Halbzeuge W, W' werden in einem thermischen Umformprozess zu dreidimensional geformten Strukturbauteile B weiterverarbeitet. Während des Umformprozesses wird gleichzeitig eine Rippenstruktur RS in das thermoplastische Stützmaterial S eingeprägt. Hierzu wird das Halbzeug W, W' vor dem Zuführen in das Umformwerkzeug aufgeheizt, so dass sich das thermoplastische Stützmaterial S (und gegebenenfalls der faserverstärkte Thermoplast T2 oder T3) plastisch umformen und die Rippenstruktur RS erzeugen lässt (bzw. lassen).

In Fig. 8 ist eine Anlage zum thermischen Umformen von bandförmigem Halbzeug W und gleichzeitigem Einprägen einer Rippenstruktur RS skizziert. Das bandförmige Halbzeug W kann beispielsweise in einem kontinuierlichen Bandlaufprozess gemäß Fig. 1 hergestellt und zu einem Coil C aufgewickelt worden sein. Das bandförmige (gegebenenfalls vom Coil C abgewickelte) Halbzeug W wird mittels einer Heizeinrichtung 11, beispielsweise eines Durchlaufofens auf eine für die nachfolgende Umformung des thermoplastischen Materials S ausreichende Temperatur aufgeheizt. Sodann wird das aufgeheizte Halbzeug W in das Umformwerkzeug eingeführt. Die in Fig. 8 lediglich schematisch skizzierte Umformvorrichtung ist als kontinuierlich arbeitende Umformvorrichtung ausgeführt, mittels der das Halbzeug W durch Rollformen beispielsweise in ein L-, Z- oder U-Profil umformt wird, wobei gleichzeitig mittels mindestens einer strukturierten Prägerolle (Strukturrolle) 12 eine Rippenstruktur RS in das erhitze thermoplastische Stützmaterial eingeformt wird. Das so hergestellte Profil wird in der Umformvorrichtung gekühlt. Hierzu kann vorzugsweise eine der Umformrollen 13 und/oder Prägerollen (Strukturrollen) 12 mit einem oder mehreren Temperierkanälen (nicht gezeigt) versehen sein. Alternativ oder zusätzlich kann das Profil in Transportrichtung hinter den Umform- bzw. Prägerollen 13, 12 beispielsweise mit einem Kühlmedium, vorzugsweise einem gasförmigen Kühlmedium beaufschlagt werden. Des Weiteren kann das Profil in der in Fig. 8 skizzierten Anlage auch noch beschnitten, gelocht, auf Endkontur abgestellt und/oder abgelängt werden. Die hierfür erforderlichen Schneid- und/oder Stanzwerkzeuge sind in Fig. 8 beispielhaft lediglich als Schneidmesser 14 dargestellt.

In Fig. 9 ist eine Anlage zum thermischen Umformen von erfindungsgemäß hergestellten Halbzeugen W', die in Form von Platinen D vorkonfektioniert sind. Die Platinen D können beispielsweise in einem kontinuierlichen Bandlaufprozess gemäß Fig. 1 oder einem diskontinuierlichen Patch- und Laminierprozess gemäß Fig. 2 hergestellt worden sein.

Die Platinen D werden zunächst auf eine für die nachfolgende Umformung des thermoplastischen Materials ausreichende Temperatur aufgeheizt. Dies wird beispielsweise mittels eines Durchlaufofens oder einer Heizstrahleinrichtung 11' durchgeführt. Sodann wird die aufgeheizte Platine D in eine Umformpresse 15 eingelegt. Die Formungsflächen der Umformwerkzeuge 15.1, 15.2 sind entsprechend der Kontur des herzustellenden Strukturbauteils B ausgebildet. Zudem weist das dem thermoplastischen Stützmaterial S zugeordnete Umformwerkzeug 15.1 das Negativ 16 einer in das Stützmaterial S einzuformenden Rippenstruktur RS auf. Das aufgeheizte, in der Umformpresse hergestellte Strukturbauteil B wird in der Presse 15 temperiert, beispielsweise abgekühlt. Hierzu weist zumindest eines der Umformwerkzeuge 15.1, 15.2, vorzugsweise zumindest das dem thermoplastischen Stützmaterial S zugeordnete Umformwerkzeug 15.1, Temperierkanäle 17 auf. Je nach Anwendung kann auch ein konventionelles "kaltes" Umformwerkzeug verwendet werden.

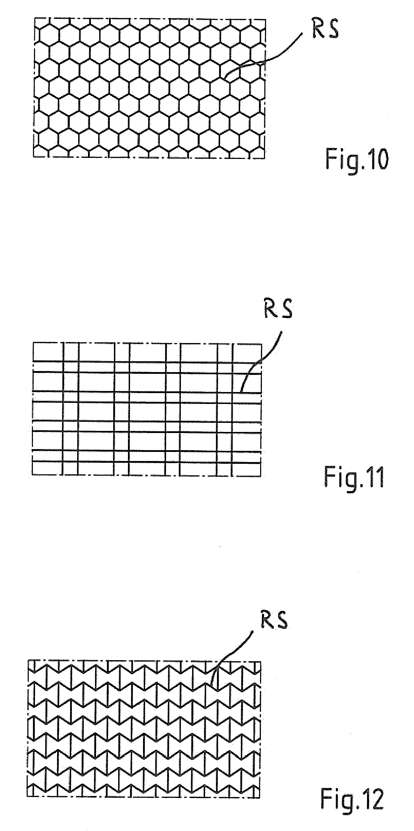

Die in das thermoplastische Stützmaterial S eingeformte Rippenstruktur RS erhöht die Steifigkeit und Festigkeit des erfindungsgemäß hergestellten Strukturbauteils B. Die Rippenstruktur RS wird vorzugsweise zumindest partiell in Form einer wabenförmigen (Fig. 10), kästchenförmigen (Fig. 11) und/oder auxetischen Rippenstruktur (Fig. 12) in das thermoplastische Stützmaterial S eingeformt. Die kästchenförmige Rippenstruktur weist vorzugsweise unterschiedlich große, insbesondere im Wesentlichen rechteckige Kästchen auf (vgl. Fig. 11).

Prinzipiell, in den in der Zeichnung dargestellten Ausführungsbeispielen aber nicht gezeigt, liegt es auch im Rahmen der vorliegenden Erfindung, eine sogenannte "Funktionsintegration" im hergestellten Bauteil vorzusehen, d.h. dass Einleger, wie beispielsweise Schrauben, Muttern, Inserts etc., im Werkzeug positioniert und anschließend im formgebenden Prozess vom Stützmaterial aufgenommen ("umspritzt") werden, so dass ein Kraft- und Formschluss resultiert. Neben den genannten Rippenstrukturen können auch lokal beispielsweise Anschraubdome aus dem Stützmaterial geformt werden.

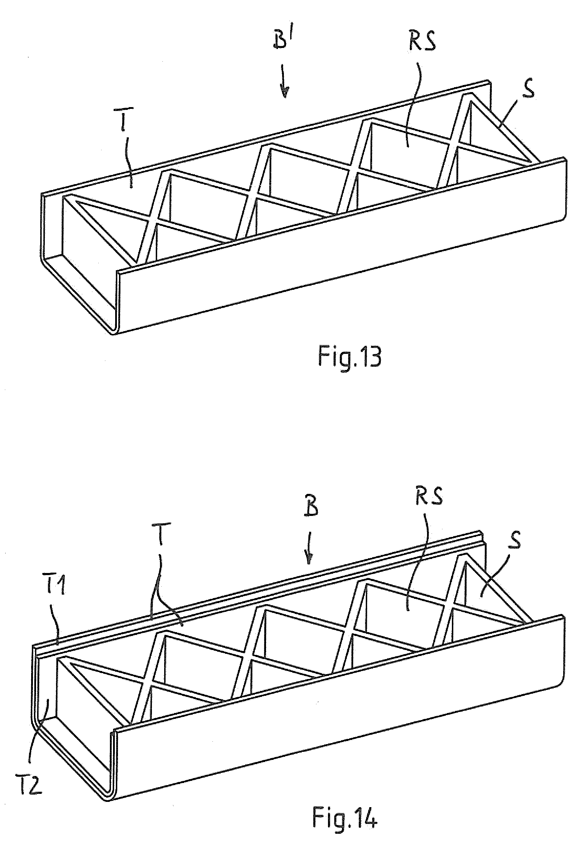

Die Figuren 13 und 14 zeigen schematisch zwei erfindungsgemäß hergestellte Strukturbauteile. Das in Fig. 13 dargestellte Strukturbauteil B' besitzt eine einschichtige Schale aus Metallblech oder einem faserverstärkten Thermoplasten als Trägermaterial T und eine Rippenstruktur RS aus thermoplastischen Stützmaterial S. Das in Fig. 14 dargestellte Strukturbauteil B besitzt dagegen eine zweischichtige Schale aus Metallblech T1 und einem faserverstärkten Thermoplasten T2 als Trägermaterial T und ebenfalls eine Rippenstruktur RS aus thermoplastischen Stützmaterial S.

Mit dem erfindungsgemäßen Verfahren können Strukturbauteile, die einer statischen und/oder dynamischen Belastung unterliegen, hergestellt werden, insbesondere Fahrzeugteile, zum Beispiel Seitenaufprallträger, Stoßfänger, Schweller, Verstärkungsbleche, Dachsäulen und auch Fahrzeugaußenhautteile, wie z.B. eine Türaußenhaut mit innenseitiger Verstärkungsstruktur und eine Motorhaube mit integrierter Innenstruktur.

## Patentansprüche

1. Verfahren zum Herstellen eines Strukturbauteils (B, B') für eine Karosserie, bei dem ein flächiges Trägermaterial (T1, T2, T3, T4) aus Metall, thermoplastischem Kunststoff und/oder faserverstärktem thermoplastischem Kunststoff zu einem dreidimensionalen Bauteil umgeformt wird, und bei dem das Trägermaterial (T1, T2, T3, T4) mit Stützmaterial (S, S') aus thermoplastischem Kunststoff versehen wird, so dass das Trägermaterial (T1, T2, T3, T4) und das Stützmaterial (S, S') einen stoffschlüssigen Materialverbund (W, W') bilden, **dadurch gekennzeichnet, dass** das Trägermaterial einschichtig oder als mehrschichtiger Materialverbund ausgebildet ist, wobei eine der Lagen des mehrschichtigen Materialverbundes aus Metall besteht, dass der aus dem Trägermaterial (T1, T2, T3, T4) und dem Stützmaterial (S, S') aufgebaute Materialverbund vor dem Umformen des Trägermaterials zu dem dreidimensionalen Bauteil (B, B') hergestellt wird, wobei die Schichtdicke des Stützmaterials (S, S') mindestens das Zweifache der Dicke des flächigen, ein- oder mehrlagigen Trägermaterials (T1, T2, T3, T4) beträgt, dass der Materialverbund vor dem Umformen erhitzt wird, um eine Umformung des thermoplastischen Kunststoffs zu ermöglichen, dass während des Umformens des Materialverbundes (W, W') eine Rippenstruktur (RS) in das Stützmaterial (S, S') eingeprägt wird, und dass das dreidimensionale, die Rippenstruktur (RS) aufweisende Bauteil (B, B') temperiert wird.

2. Verfahren nach Anspruch 1, **dadurch gekennzeichnet, dass** das Temperieren des Bauteils (B, B') als Kühlen des Bauteils (B, B') erfolgt.

3. Verfahren nach Anspruch 1 oder 2, **dadurch gekennzeichnet, dass** das Umformen des Materialverbundes (W) und das Temperieren des Bauteils (B, B') mittels eines temperierten Umformwerkzeuges (15.1, 15.2) durchgeführt werden.

4. Verfahren nach einem der Ansprüche 1 bis 3, **dadurch gekennzeichnet, dass** das die Rippenstruktur (RS) aufweisende Bauteil beschnitten, gelocht und/oder auf Endkontur abgestellt wird.

5. Verfahren nach einem der Ansprüche 1 bis 4, **dadurch gekennzeichnet, dass** der aus dem Trägermaterial und dem Stützmaterial aufgebaute Materialverbund (W) in einem kontinuierlichen Bandlaufprozess hergestellt wird, wobei bandförmiges Trägermaterial (T1, T2) und bandförmiges Stützmaterial (S) miteinander stoffschlüssig verbunden werden.

6. Verfahren nach einem der Ansprüche 1 bis 4, **dadurch gekennzeichnet, dass** der aus dem Trägermaterial und dem Stützmaterial aufgebaute Materialverbund in einem diskontinuierlichen Laminier- und/oder Materialauftragsprozess hergestellt wird, wobei auf vorkonfektionierte Trägermaterialplatinen (T3) zumindest partiell Stützmaterial (S') in der Weise aufgebracht wird, dass eine stoffschlüssige Verbindung zwischen der jeweiligen Trägermaterialplatine (T3) und dem darauf aufgebrachten Stützmaterial (S') erzeugt wird.

7. Verfahren nach einem der Ansprüche 1 bis 6, **dadurch gekennzeichnet, dass** das Stützmaterial (S, S') in Form einer homogenen, flächigen Schicht auf das Trägermaterial (T1, T2, T3, T4) aufgebracht wird.

8. Verfahren nach einem der Ansprüche 1 bis 7, **dadurch gekennzeichnet, dass** als Stützmaterial (S) faserverstärkter thermoplastischer Kunststoff verwendet wird.

9. Verfahren nach einem der Ansprüche 1 bis 8, **dadurch gekennzeichnet, dass** das Stützmaterial (S, S') auf einen oder mehrere definierte Teilflächenbereiche des Trägermaterials (T2, T4) aufgebracht wird.

10. Verfahren nach Anspruch 9, **dadurch gekennzeichnet, dass** auf verschiedene Teilflächenbereiche des Trägermaterials (T2, T4) das Stützmaterial (S, S') mit unterschiedlicher Materialzusammensetzung aufgebracht wird.

11. Verfahren nach einem der Ansprüche 1 bis 10, **dadurch gekennzeichnet, dass** das Stützmaterial (S) in Form eines einzelnen Streifens oder in Form mehrerer Streifen auf das Trägermaterial (T2) aufgebracht wird, so dass der jeweilige Streifen einen Teilflächenbereich des Trägermaterials (T2) bedeckt.

12. Verfahren nach einem der Ansprüche 1 bis 11, **dadurch gekennzeichnet, dass** das Stützmaterial (S, S') in mehreren Lagen auf das Trägermaterial (T1, T2, T3, T4) aufgebracht wird.

13. Verfahren nach Anspruch 12, **dadurch gekennzeichnet, dass** die Lagen des Stützmaterials (S, S') mit unterschiedlicher Materialzusammensetzung, unterschiedlicher Flächengröße auf das Trägermaterial (T1, T2, T3, T4) aufgebracht werden.

14. Verfahren nach einem der Ansprüche 1 bis 13, **dadurch gekennzeichnet, dass** die Rippenstruktur (RS) zumindest partiell in Form einer auxetischen Rippenstruktur eingeprägt wird.

15. Verfahren nach einem der Ansprüche 1 bis 14, **dadurch gekennzeichnet, dass** die Rippenstruktur (RS) zumindest partiell in Form einer wabenförmigen Rippenstruktur eingeprägt wird.

## Claims

1. Method for producing a structural component (B, B') for a vehicle body, in which method a flat carrier material (T1, T2, T3, T4) made of metal, thermoplastic material and/or fiber-reinforced thermoplastic material is formed to give a three-dimensional component, and in which method the carrier material (T1, T2, T3, T4) is provided with supporting material (S, S') made of thermoplastic material, such that the carrier material (T1, T2, T3, T4) and the supporting material (S, S') form an integral material composite (W, W'), **characterized in that** the carrier material has a single-layer form or is in the form of a multi-layer material composite, one of the plies of the multi-layer material composite consisting of metal, **in that** the material composite made up of the carrier material (T1, T2, T3, T4) and the supporting material (S, S') is produced before the carrier material is formed to give the three-dimensional component (B, B'), the layer thickness of the supporting material (S, S') being at least twice the thickness of the flat single-ply or multi-ply carrier material (T1, T2, T3, T4), **in that** the material composite is heated before the forming in order to make forming of the thermoplastic material possible, **in that** a rib structure (RS) is impressed into the supporting material (S, S') during the forming of the material composite (W, W'), and **in that** the temperature of the three-dimensional component (B, B') having the rib structure (RS) is controlled.

2. Method according to Claim 1, **characterized in that** the temperature of the component (B, B') is controlled by cooling the component (B, B').

3. Method according to Claim 1 or 2, **characterized in that** the material composite (W) is formed and the temperature of the component (B, B') is controlled by means of a temperature-controlled forming tool (15.1, 15.2).

4. Method according to one of Claims 1 to 3, **characterized in that** the component having the rib structure (RS) is cut, perforated and/or set to end contour.

5. Method according to one of Claims 1 to 4, **characterized in that** the material composite (W) made up of the carrier material and the supporting material is produced in a continuous strip running process, strip-shaped carrier material (T1, T2) and strip-shaped supporting material (S) being integrally connected to one another.

6. Method according to one of Claims 1 to 4, **characterized in that** the material composite made up of the carrier material and the supporting material is produced in a discontinuous laminating and/or material application process, supporting material (S') being applied at least partially to prefabricated carrier material plates (T3) in such a manner that an integral connection is generated between the respective carrier material sheet (T3) and the supporting material (S') applied thereto.

7. Method according to one of Claims 1 to 6, **characterized in that** the supporting material (S, S') is applied to the carrier material (T1, T2, T3, T4) in the form of a homogeneous, flat layer.

8. Method according to one of Claims 1 to 7, **characterized in that** the supporting material (S) used is fiber-reinforced thermoplastic material.

9. Method according to one of Claims 1 to 8, **characterized in that** the supporting material (S, S') is applied to one or more defined subarea regions of the carrier material (T2, T4).

10. Method according to Claim 9, **characterized in that** the supporting material (S, S') is applied to various subarea regions of the carrier material (T2, T4) with a different material composition.

11. Method according to one of Claims 1 to 10, **characterized in that** the supporting material (S) is applied to the carrier material (T2) in the form of an individual strip or in the form of a plurality of strips, such that the respective strip covers a subarea region of the carrier material (T2).

12. Method according to one of Claims 1 to 11, **characterized in that** the supporting material (S, S') is applied to the carrier material (T1, T2, T3, T4) in a plurality of plies.

13. Method according to Claim 12, **characterized in that** the plies of the supporting material (S, S') are applied to the carrier material (T1, T2, T3, T4) with a different material composition, different area size.

14. Method according to one of Claims 1 to 13, **characterized in that** the rib structure (RS) is impressed at least partially in the form of an auxetic rib structure.

15. Method according to one of Claims 1 to 14, **characterized in that** the rib structure (RS) is impressed at least partially in the form of a honeycomb-shaped rib structure.

## Revendications

1. Procédé de fabrication d'un composant structurel (B, B') pour une carrosserie, dans lequel un matériau porteur plat (T1, T2, T3, T4) en métal, en plastique thermoplastique et/ou en plastique thermoplastique renforcé par des fibres est façonné pour former un composant tridimensionnel, et dans lequel le matériau porteur (T1, T2, T3, T4) est pourvu d'un matériau de support (S, S') en plastique thermoplastique, de telle sorte que le matériau porteur (T1, T2, T3, T4) et le matériau de support (S, S') forment un assemblage de matériaux par engagement par liaison de matière (W, W'), **caractérisé en ce que** le matériau porteur est réalisé à une seule couche ou sous forme d'assemblage de matériaux multicouches, l'une des couches de l'assemblage de matériaux multicouches se composant de métal, **en ce que** l'assemblage de matériaux constitué du matériau porteur (T1, T2, T3, T4) et du matériau de support (S, S') est réalisé avant le façonnage du matériau porteur pour former le composant tridimensionnel (B, B'), l'épaisseur de couche du matériau de support (S, S') étant au moins le double de l'épaisseur du matériau porteur plat à une ou plusieurs couches (T1, T2, T3, T4), **en ce que** l'assemblage de matériaux est chauffé avant le façonnage afin de permettre le façonnage du plastique thermoplastique, **en ce que** pendant le façonnage de l'assemblage de matériaux (W, W'), une structure nervurée (RS) est imprimée dans le matériau de support (S, S'), et **en ce que** le composant tridimensionnel (B, B') présentant la structure nervurée (RS) est régulé en température.

2. Procédé selon la revendication 1, **caractérisé en ce que** la thermorégulation du composant (B, B') est effectuée en tant que refroidissement du composant (B, B').

3. Procédé selon la revendication 1 ou 2, **caractérisé en ce que** le façonnage de l'assemblage de matériaux (W) et la thermorégulation du composant (B, B') sont effectués au moyen d'un outil de façonnage régulé en température (15.1, 15.2).

4. Procédé selon l'une quelconque des revendications 1 à 3, **caractérisé en ce que** le composant présentant la structure nervurée (RS) est découpé, percé et/ou coupé au contour final.

5. Procédé selon l'une quelconque des revendications 1 à 4, **caractérisé en ce que** l'assemblage de matériaux (W) constitué du matériau porteur et du matériau de support est fabriqué dans un processus à entraînement à bande continu, le matériau porteur en forme de bande (T1, T2) et le matériau de support en forme de bande (S) étant connectés l'un à l'autre par engagement par liaison de matière.

6. Procédé selon l'une quelconque des revendications 1 à 4, **caractérisé en ce que** l'assemblage de matériaux constitué du matériau porteur et du matériau de support est fabriqué dans un processus de laminage et/ou d'application de matériau discontinu, un matériau de support (S') étant appliqué au moins en partie sur des platines de matériau porteur préfabriquées (T3) de telle sorte qu'un assemblage par engagement par liaison de matière entre la platine de matériau porteur respective (T3) et le matériau de support (S') appliqué sur celle-ci soit produit.

7. Procédé selon l'une quelconque des revendications 1 à 6, **caractérisé en ce que** le matériau de support (S, S') est appliqué sous la forme d'une couche homogène plate sur le matériau porteur (T1, T2, T3, T4).

8. Procédé selon l'une quelconque des revendications 1 à 7, **caractérisé en ce que** l'on utilise en tant que matériau de support (S) un plastique thermoplastique renforcé par des fibres.

9. Procédé selon l'une quelconque des revendications 1 à 8, **caractérisé en ce que** le matériau de support (S, S') est appliqué sur une ou plusieurs zones de surface partielle définies du matériau porteur (T2, T4).

10. Procédé selon la revendication 9, **caractérisé en ce que** le matériau de support (S, S') est appliqué sur différentes zones de surface partielle du matériau porteur (T2, T4) avec une composition de matériau différente.

11. Procédé selon l'une quelconque des revendications 1 à 10, **caractérisé en ce que** le matériau de support (S) est appliqué sur le matériau porteur (T2) sous la forme d'une bande individuelle ou sous la forme de plusieurs bandes, de telle sorte que la bande respective recouvre une zone de surface partielle du matériau porteur (T2).

12. Procédé selon l'une quelconque des revendications 1 à 11, **caractérisé en ce que** le matériau de support (S, S') est appliqué en plusieurs couches sur le matériau porteur (T1, T2, T3, T4).

13. Procédé selon la revendication 12, **caractérisé en ce que** les couches du matériau de support (S, S') sont appliquées avec une composition de matériau différente, une dimension de surfaces différente sur le matériau porteur (T1, T2, T3, T4).

14. Procédé selon l'une quelconque des revendications 1 à 13, **caractérisé en ce que** la structure nervurée (RS) est imprimée au moins en partie sous la forme d'une structure nervurée auxétique.

15. Procédé selon l'une quelconque des revendications 1 à 14, **caractérisé en ce que** la structure nervurée (RS) est imprimée au moins en partie sous la forme d'une structure nervurée en nid d'abeilles.
